# EUROPÄISCHE PATENTANMELDUNG

(11) **EP 1 288 556 A1**
(43) Veröffentlichungstag der Anmeldung: **05.03.2003**
(21) Anmeldenummer: 02014505.8
(22) Anmeldetag: 29.06.2002
(51) Int. Cl.: F16L 37/084

(54) **Verbindung zweier Rohre**

(30) Priorität: 16.08.2001 DE 10139998
(71) Anmelder: Christian Bauer GmbH & Co., 73642 Welzheim (DE)
(72) Erfinder: Buchhagen, Peter, Dr., 73642 Welzheim (DE); Kästner, August, Dr., 73642 Welzheim (DE)
(74) Vertreter: Patentanwalts-Partnerschaft, Rotermund + Pfusch + Bernhard

(57) **Zusammenfassung**

Eine Verbindung zweier Rohre (1, 2), insbesondere aus einer Abgasanlage eines Fahrzeugverbrennungsmotors mit einer die Rohre (1, 2) axial gegeneinander fixierenden, sich an jedem der beiden Rohre (1, 2) an einem dort jeweils vorgesehenen Widerlager (3, 4) abstützenden Spannvorrichtung (5), soll einfach herstellbar sein und gleichzeitig einen Längenausgleich der zu verbindenden Rohre bei der Herstellung der Verbindung ermöglichen.

Zu diesem Zweck zeichnet sich eine solche Verbindung durch folgende Merkmale aus:
- das Widerlager (4) an wenigstem einem der beiden Rohre ist eine Tellerfeder (6) mit auf ihrem Innenumfang radial nach innen offen verlaufenden Schlitzen (7),
- die zwischen den radialen Schlitzen (7) gelegenen Bereiche der Tellerfeder (6) sind als um bzw. mit dem Außenrandbereich der Tellerfeder (6) schwenkbare Stege (8) ausgebildet,
- durch die Spanneinrichtung (5) sind die Stege (8) in einem gespannten, sich radial innen an dem zugeordneten Rohr (2) festklemmenden Zustand gehalten.

## Beschreibung

Die Erfindung betrifft eine Verbindung zweier Rohre, insbesondere aus einer Abgasanlage eines Fahrzeugverbrennungsmotors nach dem Oberbegriff des Patentanspruchs 1.

Eine solche Verbindung ist beispielsweise bekannt aus WO 99/02912. Dort sind die Widerlager der Rohre fest an diese angeformte Flansche. Bei Rohren, die an von ihrem Verbindungsbereich entfernt liegenden Bereichen an vorgegebenen Stellen fest eingespannt sind, können in dem Verbindungsbereich praktisch keine Längentoleranzen ausgeglichen werden.

Die Erfindung beschäftigt sich mit dem Problem, zumindest eines der Widerlager der beiden zu verbindenden Rohre längenvariabel an dem Rohr anbringen zu können. Außerdem soll dieses Widerlager einfach und kostengünstig herstellbar sein.

Eine grundsätzliche Lösung dieses Problems zeigt eine gattungsgemäße Verbindung mit den kennzeichnenden Merkmalen des Patentanspruchs 1 auf.

Zweckmäßige und vorteilhafte Ausgestaltungen sind Gegenstand der Unteransprüche.

Die Erfindung beruht auf dem allgemeinen Gedanken, wenigstens eines der Widerlager der beiden Rohre durch einen insbesondere noch bei der Durchführung des Verbindens der beiden Rohre an einer mit Bezug auf die axiale Ausrichtung an dem Rohr beliebigen Lage einfach vorsehen und sodann fixieren zu können. Hierzu eignet sich die erfindungsgemäß vorgeschlagene Tellerfeder mit am Innenumfang durch radial verlaufende Schlitze federnden Stegen ganz besonders. Die derart gestaltete Tellerfeder kann in ungespanntem Zustand insbesondere von dem Ende des Rohres aus aufgebracht werden, an dem das zweite Rohr anzubinden ist, wobei die Tellerfeder bei dem Aufbringen auf das Rohr sich in ihrem ungespannten Zustand befindet. Gespannt und damit auf dem Rohr zur Bildung eines in der Form eines Flansches vorliegenden Widerlagers fixiert wird die Tellerfeder erst in einer Axiallage, an der sie das Widerlager bilden soll.

Um einen absolut festen Sitz auf dem Rohr einnehmen zu können, ist eine punktförmige Anlage der Stege der Tellerfeder an dem Rohr durch eine entsprechende Ausgestaltung der Anlageflächen der Stege zweckmäßig. Auf diese Weise können sich die Stege in gespanntem Zustand der Tellerfeder praktisch widerhakenartig in das Rohrmaterial eingraben. Wird zum Spannen der Widerlager der beiden Rohre eine Spanneinrichtung verwendet, die umfangsmäßig keine in sich geschlossene steife Ringanlagefläche an der Tellerfeder zum Spannen dieser Feder und damit der radialen Stege besitzt, ist zwischen den Anlageflächen der Spannvorrichtung und der Tellerfeder ein die Spannkräfte gleichmäßig über eine Kreisringfläche verteilender Ring zur direkten Anlage an die Stege der Tellerfeder einzusetzen. Möglich ist es allerdings auch, die Tellerfeder in ihrem radial außerhalb der Schlitze liegenden Umfangsbereich derart starr und steif zumindest in einem radial begrenzten Ringbereich auszubilden, daß kein vorstehend beschriebener Ring eingelegt werden muß.

Die das Widerlager an mindestens einem der beiden zu verbindenden Rohre bildende Tellerfeder kann mit einer an einem drehfesten Widerlager des anderen Rohres angreifenden Verdrehsicherung versehen sein, um ein gegenseitiges Verdrehen der miteinander verbundenen Rohre zu vermeiden.

Ein Rohr mit einem erfindungsgemäßen Widerlager aus einer auf diesem vorgesehenen Tellerfeder als Verbindungsflansch kann besonders vorteilhaft mit einem Rohr verbunden werden, das an seinem Verbindungsende ein glocken-, tulpen- oder konusförmig aufgeweitetes Widerlager in der Form eines entsprechenden Flansches aufweist. In diesem Fall kann die Tellerfeder als Widerlager mit einigem Abstand von dem Ende des zugehörigen Rohres angebracht sein, so daß bei einer entsprechenden Durchmesserwahl der beiden zu verbindenden Rohre das Rohr mit der Tellerfeder als Widerlager in das an dieses anzubindende Rohr eingeschoben werden kann. Das Einschieben kann, muß jedoch nicht mit einer groben Spielpassung erfolgen. Bei einem zumindest in den Bereich der glockenförmigen Aufweitung des anzubindenden Rohres eingeschobenen Rohr mit einer erfindungsgemäßen Tellerfeder als Widerlager kann in dem Raum zwischen der glockenartigen Erweiterung des einen Rohres, der eingeschobenen Gegenfläche des anderen Rohres und der Tellerfeder eine Ringdichtung eingespannt sein und dadurch die beiden Rohre gegeneinander dichten.

Als Spannvorrichtung kann beispielsweise eine in der eingangs genannten WO 99/02912 beschriebene, zur Verbindung von flanschhaltigen Rohren einer Abgasanlage geeignete Federklammer verwendet werden. Die Federklammer muß axial eine Spannkraft besitzen, die groß genug ist, um die ein Widerlager bildende Tellerfeder für einen festen Halt auf dem Rohr in allen Belastungszuständen der Rohrverbindung ausreichend sicher gespannt halten zu können.

Ein vorteilhaftes Ausführungsbeispiel der Erfindung ist in der Zeichnung dargestellt.

In dieser zeigen
- Fig. 1: einen Längsschnitt durch eine Rohrverbindung,
- Fig. 2: eine Ansicht auf die Rohrverbindung in Richtung des Pfeiles II
- Fig. 3: eine Ansicht einer ein Widerlager eines Rohres bildenden Tellerfeder in einem nicht eingebauten Zustand,
- Fig. 4: einen Schnitt durch die Tellerfeder in Fig. 3 nach der Linie IV - IV,
- Fig. 5: die beiden zu verbindenden Rohre in ihrer Verbindungsposition, jedoch bei noch nicht angebrachter Widerlager-Spannvorrichtung und damit noch ungespannter Tellerfeder.

Zwei Rohre, nämlich ein erstes Rohr 1 und ein zweites Rohr 2 sind miteinander verbunden.

Ermöglicht wird diese Verbindung durch ein einstückig an das erste Rohr 1 angeformtes erstes Widerlager 3 sowie ein nachträglich fest an dem zweiten Rohr 2 angebrachtes zweites Widerlager 4. Beide Widerlager 3 und 4 sind durch eine nach erfolgter Verbindung der Rohre 1, 2 aufsteckbare Federklammer 5 axial gegeneinander verspannt.

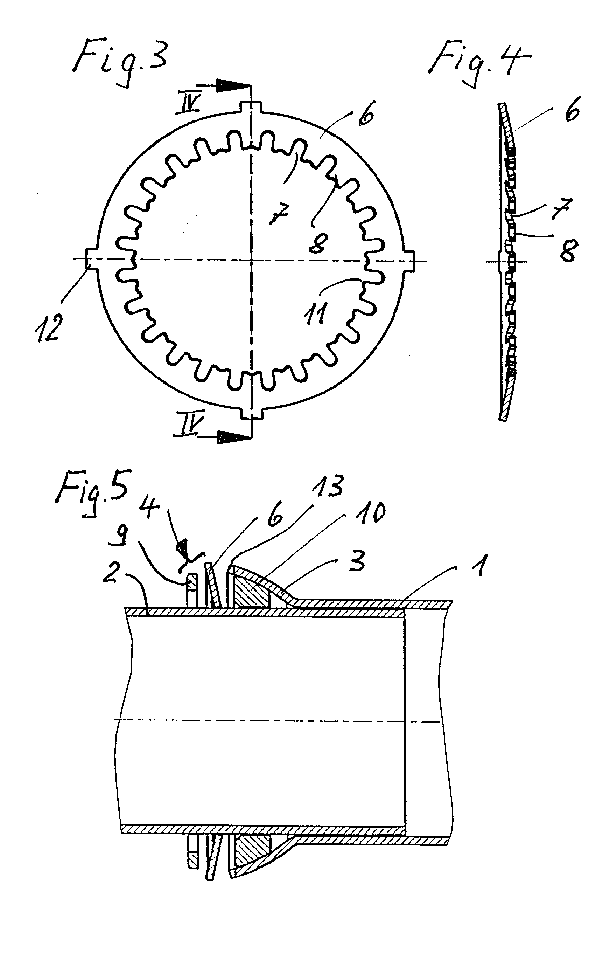

Das zweite Widerlager 4 wird gebildet von einer auf das zweite Rohr 2 nachträglich aufgeschobenen Tellerfeder 6. Diese Tellerfeder 6 ist - wie in Fig. 3 gezeigt - auf ihrem Innenumfang mit radialen, nach innen offenen Schlitzen 7 versehen. Durch diese Schlitze 7 besitzt die Tellerfeder 6 in ihrem Innenumfangsbereich radiale Stege 8. In ungespanntem Zustand der Tellerfeder 6 ist diese in üblicher Weise konisch tellerförmig ausgebildet.

Zum Verbinden der beiden Rohre 1 und 2 werden diese Rohre ein Stück ineinander geschoben. Hierbei wird gleichzeitig die Tellerfeder 6 beim Aufschieben des zweiten Rohres 2 auf das erste Rohr 1 auf dieses Rohr bis zu einer Lage aufgeschoben, die der Verbindungsposition der beiden Rohre 1, 2 entspricht.

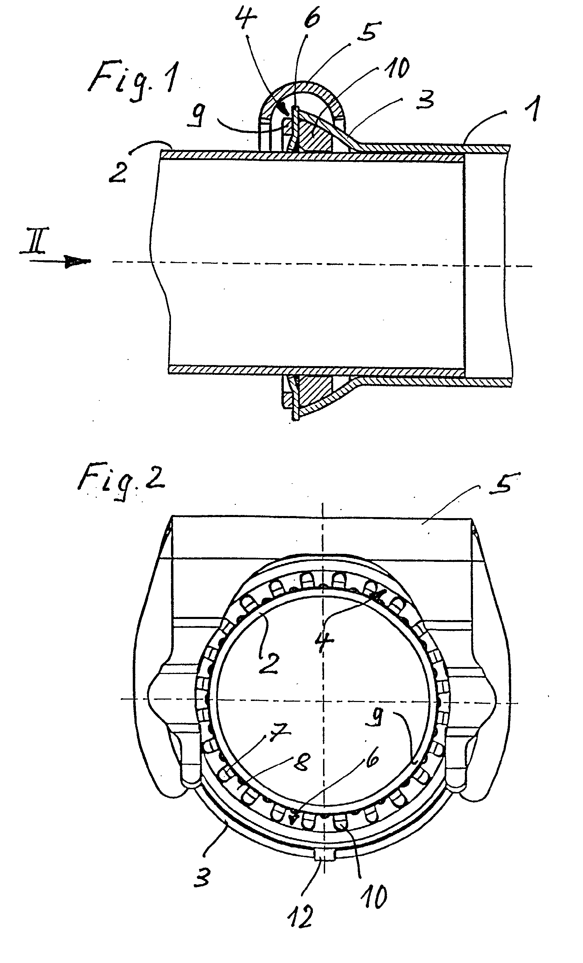

Da die Federklammer 5 als axiale Spannvorrichtung für die Widerlager 3, 4 an der Tellerfeder 6 keine auf einem radial beschränkten Ringbereich der Tellerfeder 6 starre, umfangsmäßig verformungsfreie Anlage gewährleistet, ist zwischen die Federklammer 5 und die Tellerfeder 6 ein starrer, steifer Ring 9 eingelegt, über den die axiale Spannkraft der Federklammer 5 auf die Tellerfeder 6 aufgebracht wird, um diese zur Erzielung einer absolut sicheren Fixierung zu spannen. Während die Fig. 5 die Tellerfeder 6 noch in ungespannter Einbaulage zeigt, befindet sich die Tellerfeder 6 bei der Darstellung in Fig. 1 in ihrer gespannten und damit axial fixierten Lage.

Damit die Tellerfeder 6 sich mit ihren radialen Stegen 8 in gespanntem Zustand in dem Rohr 2, auf dem sie angebracht ist, fest verklammern bzw. eingraben kann, sind die an dem Rohr zu liegen kommenden Anlagenflächen der Stege 8 für eine punktuelle Anlage ausgebildet. Erreicht wird dies konkret durch beispielsweise angeformte Zacken bzw. Spitzen 11.

Um ein Verdrehen der miteinander verbundenen Rohre 1, 2 zu vermeiden, sind an dem Außenumfang der Tellerfeder 6 stegartige Verdrehsicherungen 12 vorgesehen, die in zugeordnete Ausnehmungen 13 des ersten Widerlagers 3 eingreifen.

In dem Raum, der zwischen dem zweiten Rohr 2, der glockenförmigen Erweiterung in der Form des ersten Widerlagers 3 des ersten Rohres 1 sowie der Tellerfeder 6 liegt, ist eine die beiden Rohre 1, 2 gegeneinander dichtende Ringdichtung 10 vorgesehen. Durch die Federklammer 5 ist diese Ringdichtung 10 zwischen ihren Anlageflächen verspannt.

Ein besonderer Vorteil der Erfindung besteht darin, daß das von der Tellerfeder 6 gebildete zweite Widerlager 4 erst bei der Herstellung der Verbindung der beiden Rohre 1, 2 ihre axiale Position an dem betreffenden Rohr 2, an dem sie das Widerlager 4 ausbildet, angebracht werden muß. Damit sind bei der Rohrmontage Rohrlängentoleranzen auf einfache Weise ausgleichbar.

## Patentansprüche

1. Verbindung zweier Rohre, insbesondere aus einer Abgasanlage eines Fahrzeugverbrennungsmotors mit einer die Rohre axial gegeneinander fixierenden, sich an jedem der beiden Rohre an einem dort jeweils vorgesehenen Widerlager abstützenden Spannvorrichtung,
**gekennzeichnet durch** die Merkmale,
- das Widerlager (4) an wenigstem einem der beiden Rohre (1, 2) ist eine Tellerfeder (6) mit auf ihrem Innenumfang radial nach innen offen verlaufenden Schlitzen (7),
- die zwischen den radialen Schlitzen (7) gelegenen Bereiche der Tellerfeder (6) sind als um bzw. mit dem Außenrandbereich der Tellerfeder (6) schwenkbare Stege (8) ausgebildet,
- **durch** die Spanneinrichtung (5) sind die Stege (8) in einem gespannten, sich radial innen an dem zugeordneten Rohr (2) festklemmenden Zustand gehalten.

2. Verbindung nach Anspruch 1,
**dadurch gekennzeichnet,**
**daß** die Stege (8) radial innen sich jeweils punktuell an eine im wesentlichen glatte Mantelfläche des von der Tellerfeder (6) umfaßten Rohres (2) anlegbare Anlagebereiche (11) besitzt.

3. Verbindung nach Anspruch 1 oder 2,
**dadurch gekennzeichnet,**
**daß** als ein axiales Gegenlager zum Spannen der Tellerfeder (6) ein gegenüber der Tellerfeder (6) steiferer, sich axial an zumindest einem radial begrenzten, gegenüber der Tellerfeder (6) koaxial ausgerichteten Ringbereich anlegbarer Ring (9) vorgesehen ist.

4. Verbindung nach einem der vorhergehenden Ansprüche,
**dadurch gekennzeichnet,**
**daß** die Tellerfeder (6) mit einer Verdrehsicherung (12) gegenüber einem festen Widerlager (3) des Gegenrohres (1) ausgestattet ist.

5. Verbindung zweier Rohre nach einem der vorhergehenden Ansprüche, bei der lediglich das Widerlager eines der beiden Rohre als Tellerfeder ausgebildet ist,
**dadurch gekennzeichnet,**
**daß** das nicht als Tellerfeder (6) ausgebildete Widerlager (3) an einem Ende des betreffenden Rohres (1) eine angeformte, glocken-, tulpen- oder konusförmige Erweiterung ist, in der eine zwischen dem Innenumfang dieser Erweiterung und einem in den Bereich dieser Erweiterung eingeführten Bereich des angebundenen zweiten Rohres (2) eine Ringdichtung (10) durch axiale Anlage an der Tellerfeder (6) des zweiten Rohres (2) dicht eingespannt ist.
